# EUROPEAN PATENT SPECIFICATION

(11) **EP 2 079 066 B1**
(45) Date of publication and mention of the grant of the patent: **10.08.2011**
(21) Application number: 08004176.7
(22) Date of filing: 06.03.2008
(51) Int. Cl.: G08G 1/0965, G08G 1/127, G08G 1/137, G01S 5/00, G08G 1/123, G08G 1/16

(54) **On-vehicle electronic apparatus and automotive communication system**
Elektronisches Bordgerät für Fahrzeuge und Kommunikationssystem für Fahrzeuge
Appareil électronique embarqué et système de communication automobile

(30) Priority: 03.12.2007 JP 2007061717
(43) Date of publication of application: 15.07.2009
(73) Proprietor: Xanavi Informatics Corporation, Zama-shi, Kanagawa 228-0012 (JP)
(72) Inventor: Sumizawa, Akio, Zama-shi Kanagawa 228-0012 (JP)
(74) Representative: MERH-IP Matias Erny Reichl Hoffmann

(56) References cited:
- JP-A- 2006 064 616
- US-A1- 2005 203 677

## Description

The present invention relates to an on-vehicle electronic apparatus installed in a vehicle and an automotive communication system that includes the on-vehicle electronic apparatus.

There is an on-vehicle electronic device known in the related art that receives position information transmitted from another vehicle through the vehicle-to-vehicle communication and indicates in a map the position of the other vehicle determined based upon the position information having been received (Japanese Laid Open Patent Publication No. 2006-64616). In the on-vehicle electronic device in the related art disclosed in this publication, no particular consideration is given for the time lag that occurs between the time at which the position of the other vehicle is detected and the time at which the position of the other vehicle is determined at the on-vehicle electronic device based upon the position information received thereat. In other words, there is a concern that the position of the other vehicle determined at the on-vehicle electronic device may be inaccurate if the other vehicle is on the move.

The present invention relates to an on-vehicle electronic apparatus installed in a vehicle according to claim 1 with further embodiments as in claims 2-15 and an automotive communication system that includes the on-vehicle electronic apparatus as in claims 16-20.

### BRIEF DESCRIPTION OF THE DRAWINGS

FIG. 1 shows the configuration of the automotive communication system achieved in a first embodiment of the present invention;
FIG. 2 is a block diagram of the navigation apparatus;
FIG. 3 presents a flowchart of the processing executed when the subject vehicle position and the non-subject vehicle position are individually determined through the vehicle-to-vehicle communication carried out by the subject vehicle and the non-subject vehicle;
FIG. 4 presents an example of a map screen displaying a subject vehicle position mark and a non-subject vehicle position mark; and
FIG. 5 shows the configuration of the automotive communication system achieved in a second embodiment of the present invention.

### DESCRIPTION OF PREFERRED EMBODIMENTS

### First Embodiment -

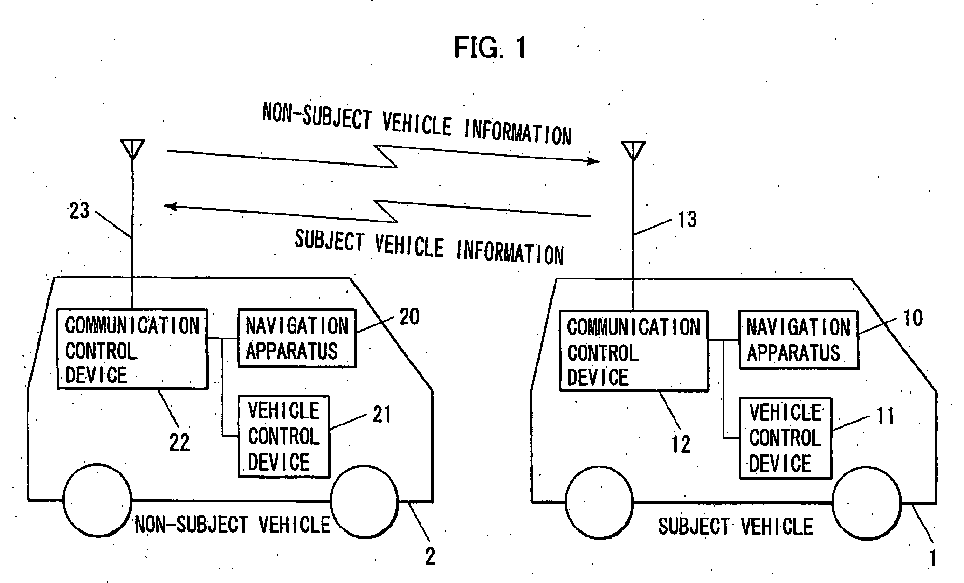

FIG. 1 shows the structure adopted in the automotive communication system achieved in the first embodiment of the present invention. In this automotive communication system, a subject vehicle 1 and a non-subject vehicle 2 exchange position information indicating their positions through the vehicle-to-vehicle communication. Based upon the exchanged position information, the subject vehicle 1 and the non-subject vehicle 2 each determine the position of the other vehicle and execute various types of vehicle control. A navigation apparatus 10, a vehicle control device 11, a communication control device 12 and an antenna 13 are installed in the subject vehicle 1. Likewise, a navigation apparatus 20, a vehicle control device 21, a communication control device 22 and an antenna 23 are installed in the non-subject vehicle 2. The automotive communication system in the embodiment is configured with these on-vehicle electronic devices installed in the subject vehicle 1 and the non-subject vehicle 2.

The navigation apparatus 10 detects the position of the subject vehicle 1 and also determines the position of the non-subject vehicle 2 based upon non-subject vehicle information transmitted from the non-subject vehicle 2. It then brings up a map over a specific range around the subject vehicle position on display at a display monitor with a subject vehicle position mark indicating the subject vehicle position and a non-subject vehicle position mark indicating the non-subject vehicle position on the map. Through this map display, the navigation apparatus 10 keeps the user abreast of the positional relationship between the subject vehicle 1 and the non-subject vehicle 2. The navigation apparatus 10 also outputs a warning sound or displays a warning message in response to an instruction from the vehicle control device 11. The warning sound or the warning message thus provided alerts the user to, for instance, the presence of the non-subject vehicle 2 traveling toward the subject vehicle 1.

In addition, as the user sets a destination, the navigation apparatus 10 executes navigation processing so as to guide the subject vehicle 1 to the destination. Namely, as a destination is set for the navigation apparatus 10 through a user operation, the navigation apparatus. 10 searches for a recommended route to the destination based upon map data. It then indicates the recommended route resulting from the search on the map and provides the user with instructions with regard to the advancing direction along the recommended route. The navigation apparatus 10 thus guides the subject vehicle 1 to the destination. It is to be noted that the subject vehicle position mark and the non-subject vehicle position mark are also displayed on the map as described earlier while the navigation apparatus 10 guides the subject vehicle 1 to the destination.

In correspondence to the behavior of the subject vehicle 1, the driving operation performed by the user and the like, the vehicle control device 11 controls various operations executed in the subject vehicle 1. For instance, it controls the acceleration of the subject vehicle 1 by adjusting the throttle opening degree based upon the extent to which the accelerator pedal is depressed, the engine speed or the like. The vehicle control device 11 makes a judgment with regard to the positional relationship between the subject vehicle 1 and the non-subject vehicle 2 and any change in the positional relationship based upon the subject vehicle position and the non-subject vehicle position determined by the navigation apparatus 10. Based upon the judgment results, the vehicle control device 11 issues a warning instruction to the navigation apparatus 10 or executes drive control for the subject vehicle 1 as necessary. For instance, if the vehicle control device 11 judges that the non-subject vehicle 2, traveling on the road intersecting the road on which the subject vehicle 1 is currently travelling, has entered a predetermined distance range from the subject vehicle 1, the vehicle control device 11 issues an instruction for the navigation apparatus 10 to output a warning indicating that the non-subject vehicle 2 is approaching. In addition, it controls the brakes in the subject vehicle 1 to stop the subject vehicle 1 if necessary.

The communication control device 12 performs vehicle-to-vehicle communication with the communication control devices 22 installed in the non-subject vehicle 2 via the antenna 13. Through the vehicle-to-vehicle communication, the communication control device 12 receives the non-subject vehicle information including non-subject vehicle position information indicating the position of the non-subject vehicle 2 and also transmits the subj ect vehicle information including subject vehicle position information indicating the position of the subject vehicle 1. It is to be noted that the subject vehicle information and the non-subject vehicle information exchanged through the vehicle-to-vehicle communication each include vehicle type information indicating the vehicle type (e.g., a large vehicle, a small vehicle or a motorcycle) and vehicle ID information used to identify the vehicle engaged in the vehicle-to-vehicle communication. The subject vehicle 1 and the non-subject vehicle 2 thus exchange position information.

The non-subject vehicle information received by the communication control device 12 is output from the communication control device 12 to the navigation apparatus 10. Based upon the non-subject vehicle information, the navigation apparatus 10 determines the position of the non-subject vehicle 2 and then outputs the results to the communication control device 12. As the determined non-subject vehicle position is output from the navigation apparatus 10, the communication control device 12 controls the subject vehicle 1 as explained earlier based upon the non-subject vehicle position. It is to be noted that the vehicle-to-vehicle communication carried out between the subject vehicle 1 and the non-subj ect vehicle 2 via the communication control devices 12 and 22 may be executed by adopting, for instance, a DSRC (Dedicated Short Range Communications) method.

The navigation apparatus 10, the vehicle control device 11, the communication control device 12 and the antenna 13 installed in the subject vehicle 1 perform the processing and the operations described above. It is to be noted that the navigation apparatus 20, the vehicle control device 21, the communication control device 22 and the antenna 23 installed in the non-subject vehicle 2 also perform similar processing and operations.

There is a time lag attributable to various causes, which occurs between the time at which the non-subject vehicle position is detected by the navigation apparatus 20 in the non-subject vehicle 2 and the time at which the non-subject vehicle position is determined at the navigation apparatus 10. For instance, the time required to execute processing before transmitting the non-subject vehicle information via the communication control device 22 after the navigation apparatus 20 in the non-subject vehicle 2 detects the non-subject vehicle position, the time required to execute the processing for receiving the non-subject vehicle information, transmitted from the communication control device 22, at the communication control device 12 in the subject vehicle 1 and outputting the received non-subject vehicle information to the navigation apparatus 10, the time required for the processing executed by the navigation apparatus 10 to determine the non-subject vehicle position based upon the non-subject vehicle information output from the communication control device 12 and the like all add up and result in the time lag. If the non-subject vehicle 2 is traveling during this time lag, the non-subject vehicle position determined by the navigation apparatus 10 is bound to be erroneous.

Accordingly, the navigation apparatus 10 corrects the non-subject vehicle position as described below. The navigation apparatus 10 detecting the subject vehicle position also detects the traveling speed (subject vehicle speed) of the subject vehicle 1. Then, information indicating the detected subject vehicle position and subject vehicle speed is transmitted as the subject vehicle information together with information indicating the detection time from the subject vehicle 1 to the non-subject vehicle 2. Likewise, the navigation apparatus 20 detects the traveling speed (the non-subject vehicle speed) of the non-subject vehicle 2 and transmits information indicating the detected non-subject vehicle position and non-subject vehicle speed as the non-subject vehicle information to the subject vehicle 1 together with information indicating the detection time. It is to be noted that such information is exchanged through the vehicle-to-vehicle communication via the communication control devices 12 and 22.

As the communication control device 12 receives the non-subject vehicle information transmitted from the non-subject vehicle 2, the navigation apparatus 10 corrects the non-subject vehicle position information included in the non-subject vehicle information_based upon the non-subject vehicle speed and the detection time indicated in the non-subject vehicle information. Namely, based upon the information indicating the detection time at which the non-subject vehicle position was detected, obtained as part of the non-subject vehicle information, the navigation apparatus 10 determines the length of time lag having elapsed up to the current time following the detection of the non-subject vehicle position at the non-subject vehicle 2. Based upon the length of this time lag and the information indicating the non-subject vehicle speed obtained as part of the non-subject vehicle information, the distance that will have been traveled by the non-subject vehicle 2 during the time lag is determined. The contents of the non-subj ect vehicle position information is then corrected by estimating the non-subject vehicle position likely to be assumed after the time lag in correspondence to the traveling direction along which the non-subject vehicle 2 is traveling based upon the distance traveled during the time lag thus determined. As a result, the deviation of the non-subject vehicle position determined by the navigation apparatus 10 relative to the actual non-subject vehicle position, attributable to the displacement of the non-subject vehicle 2 during the time lag, can be corrected.

The navigation apparatus 20, too, corrects the subject vehicle position information included in the subject vehicle information based upon the subject vehicle speed information and the detection time information included in the subject vehicle information received at the communication control device 22. As a result, the deviation of the subject vehicle position determined by the navigation apparatus 20 relative to the actual subject vehicle position, attributable to the time lag between the time at which the subject vehicle position is detected at the subject vehicle 1 and the time at which the subject vehicle position is determined by the navigation apparatus 20 is corrected. Since the deviations of the subject vehicle position and the non-subject vehicle position are individually corrected by the navigation apparatuses 10 and 20, accurate subject vehicle position and non-subject vehicle position can be ascertained.

The navigation apparatus 10 may improve the accuracy with which it estimates the non-subject vehicle position through the following measures. The navigation apparatus 10 transmitting the subject vehicle information also transmits to the non-subject vehicle 2 information that will enable the navigation apparatus 20 to estimate any change in the moving state of the subject vehicle 1, which is likely to occur between the time at which the subject vehicle position is detected and the time at which the subject vehicle position is determined at the non-subject vehicle 2. The information transmitted at this time is hereafter referred to as estimate information for the subject vehicle 1. Likewise, the navigation apparatus 20 transmits to the subject vehicle 1 estimate information for the non-subject vehicle 2 together with the non-subject vehicle information. As is the subject vehicle information and the non-subject vehicle information, the estimate information is exchanged through the vehicle-to-vehicle communication conducted via the communication control devices 12 and 22.

The estimate information may indicate the status of the driving operation performed in the subject vehicle 1 or the non-subject vehicle 2..Namely, a signal indicating the operation status of the brakes, the accelerator pedal, the steering wheel, the shifter, the turn signal or the hazard lamp in the subject vehicle 1 or the non-subject vehicle 2 maybe transmitted as the estimate information. Alternatively, a signal indicating the status of the traveling control executed in the subject vehicle 1 or the non-subject vehicle 2, e.g., the vehicle speed control status or the brake control status, may be transmitted as the estimate information. It is to be noted that different types of estimate information may be used in combination. In addition, any of various other types of information that may be used when estimating the change likely to occur in the moving state of the subject vehicle 1 or the non-subject vehicle 2 may be used as the estimate information.

It is to be noted that the driving operation status or the traveling control status in the subject vehicle 1 is detected by the vehicle control device 11 instead of the navigation apparatus 10. Namely, the navigation apparatus 10 outputs the estimate information described above to the communication control device 12 based upon the detection results indicating the driving operation status or the traveling control status, which are output by the vehicle control device 11. As this estimate information is then transmitted to the non-subject vehicle 2 by the communication control device 12, the estimate information for the subject vehicle 1 is provided to the non-subject vehicle 2. The estimate information for the non-subject vehicle 2 is provided to the subject vehicle 1 in a similar manner. Namely, the estimate information for the non-subject vehicle 2, indicating the driving operation status or the traveling operation status in the non-subject vehicle 2 detected by the vehicle control device 21 and output from the navigation apparatus 20 to the communication control device 22, is then transmitted from the non-subject vehicle 2 to the subject vehicle 1 by the communication control device 22.

If the estimate information for the non-subject vehicle 2 is transmitted from the non-subject vehicle 2, the navigation apparatus 10 estimates the change likely to occur in the moving state of the non-subject vehicle 2 based upon the contents of the transmitted estimate information. By correcting the non-subject vehicle position information based upon the estimate results, the non-subject vehicle position can be determined with greater accuracy. For instance, if the estimate information for the non-subject vehicle 2 indicates that a braking operation has been performed in the non-subject vehicle 2, the navigation apparatus 10 assumes that the non-subject vehicle 2 is decelerating and estimates a smaller traveling distance for the non-subject vehicle 2 than the traveling distance that would be estimated if no braking operation were performed. In contrast, if the estimate information for the non-subject vehicle 2 indicates that an accelerating operation has been performed in the non-subject vehicle 2, the navigation apparatus 10 assumes that the non-subject vehicle 2 is accelerating and estimates a greater traveling distance for the non-subject vehicle 2 than the traveling distance that would be estimated if no accelerating operation were performed, in correspondence to the throttle opening degree. If the estimate information for the non-subject vehicle 2 indicates that the shifter has been operated in the non-subject vehicle 2, the navigation apparatus 10 estimates a change likely to occur in the speed of the non-subject vehicle 2 in correspondence to the details of the shifter operation. In addition, if the estimate information for the non-subject vehicle 2 indicates that the turn signal has been operated at the non-subject vehicle 2, the navigation apparatus 10 estimates that the traveling direction of the non-subject vehicle 2 is changing in correspondence to the operation in correspondence to the direction indicated with the turn signal. By estimating the change likely to occur in the moving state of the non-subject vehicle 2 and adjusting the extent to which the non-subject vehicle position information is corrected based upon the estimate results as described above, the non-subject vehicle position can be determined with an even higher level of accuracy.

The navigation apparatus 20, too, estimates the change likely to occur in the state of the motion of the subject vehicle 1 based upon the estimate information transmitted from the subject vehicle 1 and corrects the subject vehicle position information by reflecting the estimate results. It is to be noted that a decision as to whether or not to transmit the estimate information may be made by judging whether or not an instruction through a user operation or a request from the other vehicle has been issued, for instance.

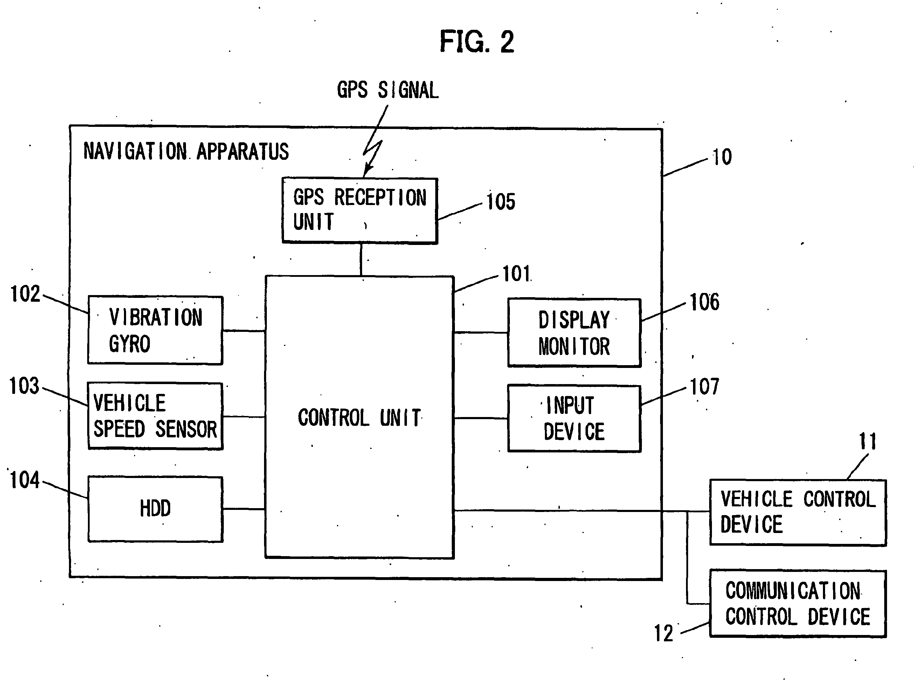

FIG. 2 shows the structure adopted in the navigation apparatus 10. The navigation apparatus 10 includes a control unit 101, a vibration gyro 102, a vehicle speed sensor 103, a hard disk (HDD) 104, a GPS reception unit 105, a display monitor 106 and an input device 107.

The control unit 101 is constituted with a microprocessor, various peripheral circuits, a RAM, a ROM and the like. Based upon a control program and map data recorded in the HDD 104, the control unit 101 executes various types of processing. For instance, it executes destination search processing to set a destination, recommended route search processing to search for a recommended route to a destination that has been set, various types of image display processing, route guidance processing and the like. The control unit 101 also executes the processing for outputting the subject vehicle information and the estimate information described earlier.

The control unit 101 is connected with the vehicle control device 11 and the communication control device 12. The control unit 101 exchanges various signals and data with the vehicle control device 11 and the communication control device 12. For instance, the subject vehicle information and the estimate information for the subject vehicle 1 are output to the communication control device 12 over predetermined time intervals. The subject vehicle information and the estimate information are transmitted from the subject vehicle 1 to the non-subject vehicle 2 through the vehicle-to-vehicle communication executed by the communication control device 12. The non-subject vehicle information and the estimate information received from the non-subject vehicle 2 are input from the communication control device 12 to the control unit 101.

As the non-subject vehicle information is input from the communication control device 12, the control unit 101 determines the position of the non-subject vehicle 2 based upon the non-subject vehicle information. At this time, the non-subject vehicle position information is corrected based upon the non-subject vehicle speed information and the detection time information included in the non-subj ect vehicle information and the position of the non-subject vehicle 2 is determined based upon the correction results. It is to be noted that if the estimate information has been transmitted from the non-subject vehicle 2, the extent to which the non-subject vehicle position information is corrected is adjusted based upon.the estimate information. The non-subject vehicle position thus determined is output, together with the subject vehicle position detection results, to the vehicle control device 11 from the control unit 101. The vehicle control device 11 makes a judgment with regard to the positional relationship between the subject vehicle 1 and the non-subject vehicle 2 and any change occurring in the positional relationship based upon the subject vehicle position detection results and the non-subject vehicle position determination results output from the control unit 101 and issues a warning instruction or executes drive control as explained earlier.

The vibration gyro 102 is a sensor that detects the angular speed of the subj ect vehicle 1. The vehicle speed sensor 103 detects the vehicle speed of the subject vehicle 1. By detecting the moving state of the subject vehicle 1 via these sensors over predetermined time intervals, the extent of displacement of the subject vehicle 1 is ascertained and then, based upon the extent of displacement, the current position of the subject vehicle 1 is detected.

The HDD 104 is a nonvolatile recording medium that allows data overwrite. Various types of data including the map data are recorded in the HDD 104. The map data recorded in the HDD 104 are read out as needed under control executed by the control unit 101 and the map data thus read out are utilized in various types of processing and control executed by the control unit 101. The map data include route calculation data, route guidance data, road data and background data. The route calculation data are used when searching for a route to the destination. The route guidance data, which are used when providing guidance for the subject vehicle 1 to the destination along the route having been set, indicate intersection names, road names and the like. The road data indicate road shapes and road types. The background data indicate the shapes of objects in the map other than the roads, such as rivers and railways, the positions of various types of facilities and the like.

The GPS reception unit 105 receives GPS signals transmitted from GPS satellites and then outputs the received GPS signals to the control unit 101. The GPS signals contain information indicating the positions of the GPS satellites having been transmitted the signals and the transmission time to be used to determine the position of the subject vehicle 1 and the current time. As GPS signals from at least a specific number of GPS satellites are received at the GPS reception unit 105, the control unit 101 is able to calculate the current position of the subject vehicle 1 and the current time based upon the information indicating the GPS satellite positions and the transmission times included in the GPS signals received at the GPS reception unit 105.

Various screen displays are brought up on the display monitor 106 of the navigation apparatus 10, which may be constituted with a liquid crystal display. As explained earlier, a map of an area around the subject vehicle 1 is brought up on display at the display monitor 106, with the subject vehicle position mark and the non-subject vehicle position mark displayed in the map. The contents of the screen brought up on display at the display monitor 106 are determined through screen display control executed by the control unit 101. The display monitor 106 is installed at a position at which the display can be viewed with ease by the user, e.g., on the dashboard or inside the instrument panel in the subject vehicle 1.

The input device 107, at which the user performs various input operations to engage the navigation apparatus 10 in operation, includes various input switches. By operating this input device 107, the user is able, for instance, to input to the navigation apparatus 10 the name or the like of a facility or a geographical point to be set as the destination, select a destination from pre-registered locations or scroll the map along a desired direction. The input device 107 may be constituted with an operation panel or a remote control unit. Alternatively, the input device 107 may be a touch panel constituting an integrated part of the display monitor 106.

As the destination is set by the user via the input device 107, the navigation apparatus 10 searches for a recommended route to the destination by executing an arithmetic operation with a specific algorithm based upon the route calculation data mentioned earlier. It then detects the current position of the subject vehicle 1, brings up on display a roadmap of an area around the current position and guides the subject vehicle 1 to the destination along the recommended route obtained through the search.

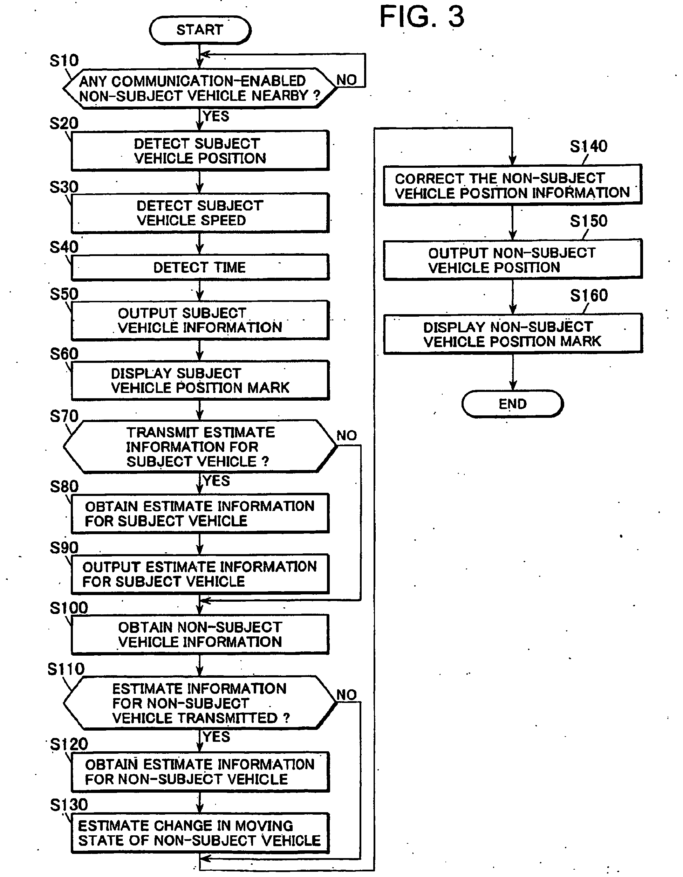

FIG. 3 presents a flowchart of the processing executed by the control unit 101 in the navigation apparatus 10 to individually determine the subject vehicle position and the non-subject vehicle position through the vehicle-to-vehicle communication carried out between the subject vehicle 1 and the non-subject vehicle 2. The processing in this flowchart is executed over predetermined communication intervals, e. g. , every 100 msec. The processing executed as shown in the flowchart is now described in detail.

In step S10, the control unit 101 makes a decision as to whether or not there is a non-subject vehicle 2 present within the range over which vehicle-to-vehicle communication between the subject vehicle 1 and the non-subject vehicle 2 is enabled. If a non-subject vehicle 2 is detected within the range over which communication with the subject vehicle 1 is enabled, the operation proceeds to the following step S20.

In step S20, the control unit 101 detects the subject vehicle position. The subject vehicle position is detected based upon the results of detections executed by the vibration gyro 102, the vehicle speed sensor 103 and the GPS reception unit 105 as explained earlier. In step S30, the control unit 101 detects the subject vehicle speed. The subject vehicle speed is detected via the vehicle speed sensor 103. In step S40, the control unit 101 detects the time. The time is detected based upon a GPS signal detected at the GPS reception unit 105. It is to be noted that the time detected in this step is the time at which the subject vehicle position and the subject vehicle speed are detected.

In step S50, the control unit 101 compiles various types of information indicating the subject vehicle position, the subject vehicle speed and the detection time having been detected through the processing executed in steps S20 through S40 and outputs the compiled information to the communication control device 12 as the subject vehicle information. The subject vehicle information thus output to the communication control device 12 is then transmitted to the non-subject vehicle 2 from the communication control device 12. As a result, the information needed by the non-subject vehicle 2 to determine the position of the subject vehicle 1 is transmitted from the subject vehicle 1 to the'non-subject vehicle 2.

In step S60, the control unit 101 displays the subject vehicle position mark on the map on display at the display monitor 106 based upon the subject vehicle position detected in step S20. The subject vehicle position mark thus brought up on display indicates the current position of the subject vehicle 1 on the map.

In step S70, the control unit 101 makes a decision as to whether or not to transmit estimate information for the subject vehicle 1 to the non-subject vehicle 2. If a specific transmission condition is satisfied, e.g., if a transmission instruction has been issued through a user operation or if a transmission request has been issued from the non-subject vehicle 2 with which the subject vehicle is communicating through the vehicle-to-vehicle communication, the control unit 101 decides that the estimate information for the subject vehicle 1 is to be transmitted to the non-subject vehicle 2 and the operation proceeds to step S80. If, on the other hand, the transmission condition is not satisfied, the control unit decides that the estimate information for the subject vehicle 1 is not to be transmitted to the non-subject vehicle 2 and the operation proceeds to step S100. In this case, the processing in steps S80 and S90 is not executed and thus, no estimate information is transmitted.

In step S80, the control unit 101 obtains the estimate information for the subject vehicle 1 from the vehicle control device 11. The estimate information for the subject vehicle 1 obtained in this step indicates the detection results of the driving operation status or the traveling control status in the subject vehicle 1 output from the vehicle control device 11 as described earlier. In the following step S90, the control unit 101 outputs the estimate information for the subject vehicle 1 obtained in step S80 to the communication control device 12. The estimate information thus output to the communication control device 12 is then transmitted to the non-subject vehicle 2 from the communication control device 12. As a result, the estimate information for the subject vehicle 1 needed by the non-subject vehicle 2 to improve the accuracy of the subject vehicle position estimate by estimating the change likely to occur in the moving state in the subject vehicle 1 is transmitted from the subject vehicle 1 to the non-subject vehicle 2.

In step S100, the control unit 101 obtains the non-subject vehicle information transmitted from the non-subject vehicle 2. The non-subject vehicle information is obtained through.the vehicle-to-vehicle communication carried out between the subject vehicle 1 and the non-subject vehicle 2 via the communication control device 12, as described earlier. Namely, the control unit 101 obtains the non-subject vehicle information as the non-subject vehicle information received.at the communication control device 12 is output from the communication control device 12 to the control unit 101. It is to be noted that the non-subject vehicle information includes the non-subject vehicle position information, the non-subject vehicle speed information and the detection time information indicating the time at which the non-subject vehicle position and the non-subject vehicle speed are detected at the non-subject vehicle 2.

In step S110, the control unit 101 makes a decision as to whether or not any estimate information for the non-subject vehicle 2 has been transmitted from the non-subject vehicle 2. If estimate information for the non-subject vehicle 2 has been transmitted, the operation proceeds to the following step S120 to obtain the estimate information. If, on the other hand, no estimate information for the non-subject vehicle 2 has been transmitted from the non-subject vehicle 2, the operation proceeds directly to step S140 from step S110 without executing steps S120 and S130.

If the operation proceeds from step S110 to step S120, the control unit 101 obtains the estimate information having been transmitted from the non-subject vehicle 2 in step S120. As in step S100, in which the non-subject vehicle information is obtained, the estimate information for the non-subject vehicle 2 is obtained through the vehicle-to-vehicle communication carried out between the subject vehicle 1 and the non-subject vehicle 2 via the communication control device 12 in this step. Namely, the control unit 101 obtains the estimate information for the non-subject vehicle 2 output thereto from the communication control device 12 having received the estimate information for the non-subject vehicle 2.

In step S130, the control unit 101 estimates the state of change occurring in the motion of the non-subject vehicle 2 based upon the estimate information obtained in step S120. In this step, various types of change likely to occur in the moving state of the non-subject vehicle 2 are estimated based upon the driving operation status or the traveling control status in the non-subject vehicle 2 indicated in the estimate information having been obtained.

In step S140, the control unit 101 corrects the non-subject vehicle position information included in the non-subject vehicle information obtained in step S100. In this step, the non-subject vehicle position information in the non-subject vehicle information is corrected based upon the non-subject vehicle speed information and the detection time information included in the non-subject vehicle information, as explained earlier. In addition, if the change likely to occur in the moving state of the non-subject vehicle 2 has been estimated in step S130, the extent to which the non-subject vehicle position information is corrected is adjusted based upon the estimated change in the moving state. As the non-subject vehicle position information is corrected as described above, the non-subject vehicle position can be determined accurately.

In step S150, the control unit 101 outputs the non-subject vehicle position information having been corrected in step S140 to the vehicle control device 11. In the following step S160, the non-subject vehicle position mark is displayed on the map on display at the display monitor 106 based upon the corrected non-subject vehicle position information. Once step S160 is executed, the processing in the flowchart in FIG. 3 ends. The subject vehicle position and the non-subject vehicle position are individually determined based upon the information exchanged through the vehicle-to-vehicle communication between the subject vehicle 1 and the non-subject vehicle 2, as described above.

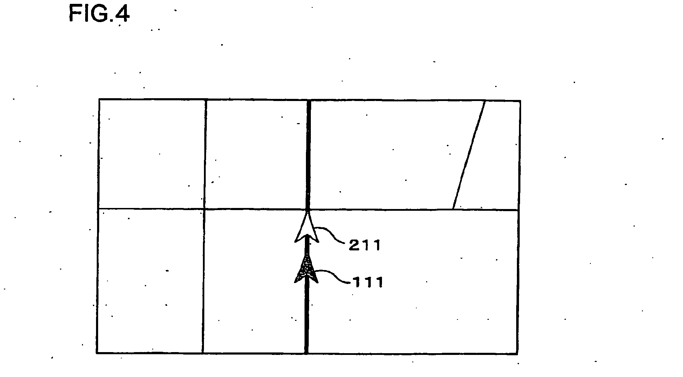

FIG. 4 presents an example of a map screen with the subj ect vehicle position mark and the non-subject vehicle position mark displayed therein through the processing described above. In this map screen, a non-subject vehicle position mark 211 is displayed on a map of an area around a subject vehicle position mark 111 .

It is to be noted that if there is a plurality of non-subject vehicles present in the vicinity of the subject vehicle 1, the communication control device 12 may receive the non-subject vehicle information and the estimate information from each of the plurality of non-subject vehicles. Under such circumstances, the control unit 101 individually executes the processing in step S100 and subsequent steps in the flowchart presented in FIG. 3 for each of the non-subject vehicles. In other words, it executes step S100 in correspondence to each of the non-subject vehicles so as to receive the non-subject vehicle information transmitted from the non-subject vehicle. In addition, it executes step S120 for each non-subject vehicle to receive the estimate information transmitted from the non-subject vehicle and executes step S130 to estimate the change likely to occur in the moving state of the particular non-subject vehicle based upon the estimate information. It then executes step S140 to individually correct the non-subject vehicle position information corresponding to the specific non-subject vehicle based upon the results of the preceding processing.

The following advantages are achieved in the first embodiment described above.
(1) Through the processing executed by the control unit 101, the navigation apparatus 10 receives the non-subject vehicle information transmitted from the non-subject vehicle 2, thereby obtaining the position information indicating the position of the non-subject vehicle 2 (step S100) and then corrects the position information for the non-subject vehicle 2 (step S140). As a result, the position of the non-subject vehicle 2 can be determined accurately.
(2) Through the processing executed by the control unit 101, the navigation apparatus 10 receives the non-subject vehicle information transmitted from the non-subject vehicle 2 thereby obtaining the non-subject vehicle position detection time information (step S100) . In step S140, thepositioninformation indicating the position of the non-subject vehicle 2 is corrected based upon the non-subject vehicle position detection time information. Thus, the position of the non-subject vehicle 2 can be determined accurately by taking into consideration the time lag between the time at which the non-subject vehicle position is detected at the non-subject vehicle 2 and the time at which the non-subject vehicle position is determined at the navigation apparatus 10.
(3) Through the processing executed by the control unit 101, the navigation apparatus 10 receives the non-subject vehicle information transmitted from the non-subject vehicle 2, thereby obtaining the speed information indicating the speed of the non-subject vehicle 2 (step S100). In step S140, the position information indicating the position of the non-subject vehicle 2 is corrected based upon the non-subject vehicle position detection time information and the speed information indicating the speed of the non-subject vehicle 2. As a result, even when the non-subject vehicle 2 is moving, the position of the non-subject vehicle 2 can be determined accurately.
(4) In step S140, the control unit 101 calculates the traveling distance over which the non-subject vehicle 2 has traveled during the time lag between the detection time at which the non-subject vehicle position was detected and the current time based upon the non-subject vehicle position detection time information and corrects the position information for the non-subject vehicle 2 based upon the traveling distance thus determined. As a result, the position of the non-subject vehicle 2 can be determined accurately by taking into consideration the change likely to have occurred with regard to the position of the non-subject vehicle 2 during the time lag.
(5) If estimate information is transmitted from the non-subject vehicle 2, the control unit 101 obtains the estimate information for the non-subject vehicle 2 (step S120) and estimates the change in the moving state of the non-subject vehicle 2 based upon the obtained estimate information (step S130). Then, based upon the estimated change in the moving state of the non-subject vehicle 2, the control unit 101 corrects the position information indicating the position of the non-subject vehicle 2 in step S140. Through these measures, the position of the non-subject vehicle 2 can be determined with greater accuracy by optimizing the extent to which the position information for the non-subject vehicle 2 is corrected.
(6) In step S130, the control unit 101 estimates the change in the moving state of the non-subject vehicle 2 based upon the driving operation status in the non-subject vehicle 2 and/or the traveling control status in the non-subj ect vehicle 2, indicated in the estimate information for the non-subject vehicle 2 having been obtained. As a result, the change in the moving state of the non-subj ect vehicle 2 can be estimated accurately.
(7) Through the processing executed by the control unit 101, the navigation apparatus 10 displays a map at the display monitor 106 and indicates the non-subject vehicle position on the map based upon the position information for the non-subject vehicle 2 having been corrected in step S140 (step S160). Thus, the user in the subject vehicle 1 is able to accurately ascertain the position of the non-subject vehicle 2.
(8) In step S100, the control unit 101 obtains the position information indicating the position of the non-subject vehicle 2, the non-subject vehicle position detection time information and the speed information indicating the speed of the non-subject vehicle 2, all transmitted as part of the non-subject vehicle information from the non-subject vehicle 2 through the vehicle-to-vehicle communication carried out between the subject vehicle 1 and the non-subject vehicle 2. This means that the control unit 101 is able to obtain the various types of information accurately indicating conditions at the non-subject vehicle 2 with ease.
(9) In step S120, the control unit 101 obtains estimate information for the non-subject vehicle 2 transmitted from the non-subject vehicle 2 through the vehicle-to-vehicle communication carried out between the subject vehicle 1 and the non-subject vehicle 2. The control unit 101 is thus able to obtain accurate estimate information with regard to the non-subject vehicle 2 with ease.
(10) The navigation apparatus 10 outputs the subject vehicle information to the communication control device 11. The communication control device 11, in turn, transmits the subj ect vehicle information to the non-subject vehicle 2 through the vehicle-to-vehicle communication (step S50). The non-subject vehicle 2 is thus able to obtain position information indicating the position of the subject vehicle 1.

### -Second Embodiment-

Next, the second embodiment of the present invention is described. In the first embodiment explained earlier, the position information is exchanged by the subject vehicle 1 and the non-subject vehicle 2 through the vehicle-to-vehicle communication. In the second embodiment, the position information is exchanged by the subject vehicle 1 and the non-subject vehicle 2 via a distribution (delivery) center.

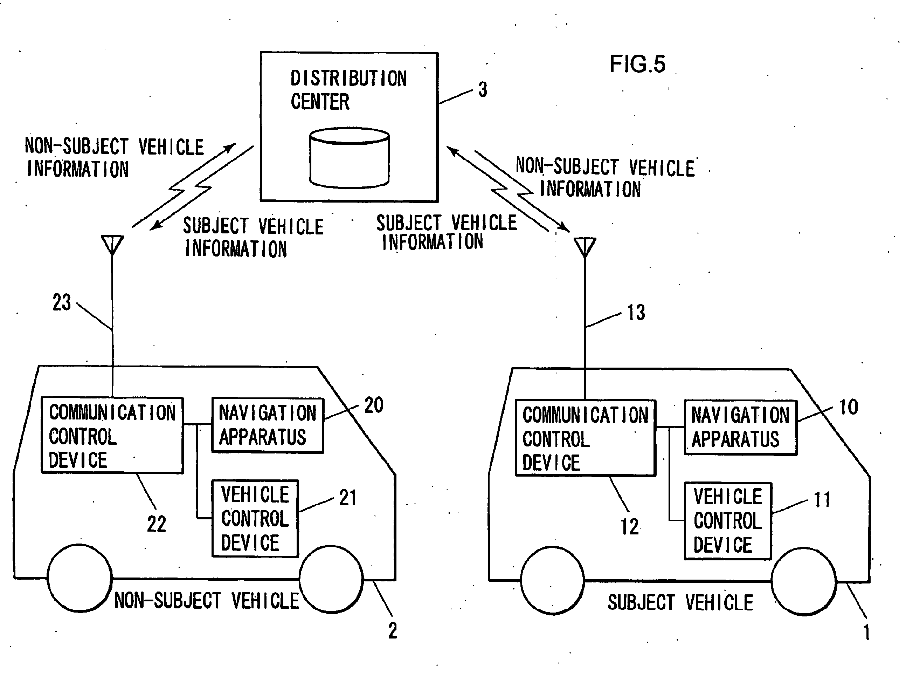

FIG. 5 shows the configuration of the automotive communication system achieved in the second embodiment. As does the automotive communication system achieved in the first embodiment shown in FIG. 1, this vehicle control system includes a subject vehicle 1, equipped with a navigation apparatus 10, a vehicle control device 11, a communication control device 12 and an antenna 13, and a non-subject vehicle 2, equipped with a navigation apparatus 20, a vehicle control device 21, a communication control device 22 and an antenna 23. The automotive communication system further includes a distribution center 3.

The communication control device 12 is connected with the distribution center 3 through wireless communication in the embodiment. Such wireless communication may be achieved through a mobile communication network for, for instance, portable telephones. The distribution center 3 provides a service of collecting the vehicle information from vehicles travelling in different regions of the country and transmitting this vehicle information to individual subject vehicles as non-subject vehicle information. Namely, as the communication control device 12 becomes connected with the distribution center 3, the subject vehicle information, which includes the subject vehicle position information, the subject vehicle speed information and the detection time information indicating the time at which the subject vehicle position and the subject vehicle speed were detected, is transmitted from the communication control device 12 to the distribution center 3. The distribution center 3, in turn, transmits non-subject vehicle information it has collected to the communication control device 12. This non-subject vehicle information initially transmitted from the communication control device 22 of the non-subject vehicle 2, has been collected at the distribution center 3 and each set of such non-subject vehicle information includes non-subject vehicle position information, non-subject vehicle speed information and detection time information indicating the time at which the non-subject vehicle position and the non-subject vehicle speed were detected.

In addition, the distribution center 3 offers a service whereby estimate information collected from vehicles traveling indifferent regions is transmitted to the individual vehicles. Namely, as the communication control device 12 becomes connected to the distribution center 3, the communication control device 12 transmits the estimate information for the subject vehicle 1 to the distribution center 3. The distribution center 3, in turn, transmits estimate information for the non-subject vehicle 2 it has collected to the communication control device 12. This estimate information for the non-subject vehicle is transmitted from the communication control device 22 in the non-subj ect vehicle 2 and is collected at the distribution center 3.

As the non-subject vehicle information and the estimate information for the non-subject vehicle 2 are transmitted from the distribution center 3 to the communication control device 12 in the subject vehicle 1, as described above, the communication control device 12 obtains the non-subject vehicle position information, the non-subject vehicle speed information and the detection time information indicating the time at which the non-subject vehicle position and the non-subject vehicle speed were detected. The communication control device 12 also obtains the estimate information for the non-subject vehicle 2. Likewise, the communication control device 22 obtains the subject vehicle position information, the subject vehicle speed information and the detection time information indicating the time at which the subject vehicle position and the subject vehicle speed were detected. The communication control device 22 also obtains the estimate information for the subject vehicle 1. In other words, the subject vehicle 1 and the non-subject vehicle 2 exchange the vehicle information and the estimate information with each other via the distribution center 3.

The communication control device 12, having obtained the non-subject vehicle information and the estimate information for the non-subject vehicle 2, outputs the obtained information to the navigation apparatus 10. Based upon the non-subject vehicle information and the estimate information, the navigation apparatus 10 and the vehicle control device 11 each execute processing similar to that explained in reference to the first embodiment.

It is to be noted that the control unit 101 in the navigation apparatus 10 in the embodiment executing the processing in the flowchart presented in FIG. 3 obtains the non-subject vehicle in formation in steps 100 as described above. Namely, it obtains the non-subject vehicle position information, the non-subject vehicle speed information and the detection time information indicating the time at which the non-subject vehicle position and the non-subject vehicle speed were detected from the distribution center 3 connected through wireless communication. In addition, the estimate information for the non-subject vehicle 2 is obtained in step S120 as described earlier. Namely, the estimate information for the non-subject vehicle 2 is obtained from the distribution center 3 connected through wireless communication.

The following advantages are achieved in the second embodiment described above.
(1) In step S100, the control unit 101 of the navigation apparatus 10 obtains the position information indicating the position of the non-subject vehicle 2, the non-subject vehicle position detection time information and the speed information indicating the speed of the non-subject vehicle 2, all provided as part of the non-subject vehicle information transmitted from the distribution center 3. This system enables the control unit 101 to obtain the position information indicating the position of the non-subject vehicle 2 even when the distance between the subject vehicle 1 and the non-subject vehicle 2 is large and vehicle-to-vehicle communication cannot be executed.
(2) In step S120, the control unit 101 of the navigation apparatus 10 obtains the estimate information for the non-subject vehicle 2 transmitted from the distribution center 3. This system enables the control unit 101 to obtain.the estimate information for the non-subject vehicle 2 even when the distance between the subject vehicle 1 and the non-subject vehicle 2 is large and vehicle-to-vehicle communication cannot be executed.
(3) The communication control device 12 transmits the position information indicating the position of the subject vehicle 1 to the distribution center 3. Thus, the position information indicating the positions of various vehicles can be collected at the distribution center 3.

It is to be noted that the first embodiment and the second embodiment described above may be adopted in combination. For instance, as long as vehicle-to-vehicle communication can be carried out by the subject vehicle 1 and the non-subject vehicle 2, the subject vehicle 1 and the non-subject vehicle 2 may exchange the vehicle information and the estimate information through the vehicle-to-vehicle communication as in the first embodiment. However, if the distance between the subject vehicle 1 and the non-subject vehicle 2 is large enough to disable vehicle-to-vehicle communication, the subject vehicle 1 and the non-subject vehicle 2 may exchange the vehicle information and the estimate information via the distribution center 3, as in the second embodiment. Through this combination, it is ensured that the subject vehicle 1 is able to obtain the non-subject vehicle information and the estimate information for the non-subject vehicle 2 with a high level of reliability.

While an explanation is given in reference to the embodiments on an example in which the non-subject vehicle position information is corrected by executing the processing shown in the flowchart in FIG. 3 in the navigation apparatus 10, the present invention is not limited to this example and it may be adopted in any of various other types of on-vehicle electronic devices. For instance, the processing in steps S100 through S150 in the flowchart presented in FIG. 3 may be executed by the communication control device 12 so as to correct the non-subject vehicle position information.

## Claims

1. An on-vehicle electronic apparatus (10) on a subject vehicle, comprising:
a position information obtaining means (101) for obtaining position information indicating a position of a non-subject vehicle (2),
**characterized by**
a correction means (101) for correcting the position information indicating the position of the non-subject vehicle (2) obtained by the position information obtaining means (101); and
an estimate information obtaining means (101) for 15 obtaining estimate information to be used to estimate a change in a moving state of the non-subject vehicle (2); and
an estimating means (101) for estimating the change in the moving state of the non-subject vehicle (2) based 20 upon the estimate information obtained by the estimate information obtaining means (101), wherein:
the correction means (101) corrects the position information indicating the position.of the non-subject vehicle (2) based upon the change in the moving state of 25 the non-subject vehicle (2) estimated by the estimating means (101).

2. An on-vehicle electronic apparatus (10) according to claim 1, wherein:
the estimate information indicates at least one of a driving operation state in the non-subject vehicle (2) and a traveling control state in the non-subject vehicle (2); and
the estimating means (101) estimates the change in the moving state of the non-subject vehicle (2) based upon at least one of the driving operation state and the traveling control state in the non-subject vehicle (2) indicated in the estimate information.

3. An on-vehicle electronic apparatus (10) according to claims 1 or 2, further comprising:
a detection time information obtaining means (101) for obtaining detection time information indicating a detection time at which the position of the non-subject vehicle (2) is detected, wherein:
the correction means (101) corrects the position information indicating the position of the non-subject vehicle (2) based upon the detection time information obtained by the detection time information obtaining means (101).

4. An on-vehicle electronic apparatus (10) according to claim 3, further comprising:
a speed information obtaining means (101) for obtaining speed information indicating a speed of the non-subject vehicle (2), wherein: the correction means (101) corrects the position information indicating the position of the non-subject vehicle (2) based upon the detection time information and the speed information indicating the speed of the non-subject vehicle (2) obtained by the speed information obtaining means (101).

5. An on-vehicle electronic apparatus (10) according to claim 4, wherein:
the correction means (101) calculates a traveling distance over which the non-subject vehicle (2) has traveled during a time lag between the detection time at which the position of the non-subject vehicle (2) was detected and a current time based upon the detection time information and corrects the position information indicating the position of the non-subject vehicle (2) based upon the traveling distance thus calculated.

6. An on-vehicle electronic apparatus (10) according to claim 5, wherein:
the estimate information indicates a braking operation in the non-subject vehicle (2),
the estimating means (101) estimates that the non-subject vehicle (2) is decelerating based upon the estimate information indicating the braking operation; and
the correction means (101) decreases the traveling distance if the estimating means (101) has estimated that the non-subject vehicle (2) is decelerating.

7. An on-vehicle apparatus (10) according to claim 5, wherein:
the estimate information indicates an accelerating operation in the non-subject vehicle (2),
the estimating means (101) estimates that the non-subject vehicle (2) is accelerating based upon the estimate information indicating the accelerating operation; and
the correction means (101) increases the traveling distance if the estimating means (101) has estimated that the non-subject vehicle (2) is accelerating.

8. An on-vehicle apparatus (10) according to claim 5, wherein:
the estimate information indicates a shifter operation in the non-subject vehicle (2),
the estimating means (101) estimates that the speed of the non-subject vehicle (2) is changing based upon the estimate information indicating the shifter operation; and
the correction means (101) calculates the traveling distance according to the change of speed of the non-subject vehicle (2) estimated by the estimating means (101).

9. An on-vehicle apparatus (10) according to any one of the claims 1 through 8, wherein:
the estimate information indicates a turn signal operation in the non-subject vehicle (2),
the estimating means (101) estimates that a traveling direction of the non-subject vehicle (2) is changing based upon the estimate information indicating the turn signal operation; and
the correction means (101) corrects the position information indicating the position of the non-subject vehicle (2) according to the traveling direction estimated by the estimating means (101).

10. An on-vehicle electronic apparatus (10) according to any one of claims 1 through 9, further comprising: a display control means (101) for displaying a map at a display monitor (106) and indicating the position of the non-subject vehicle (2) on the map based upon the position information indicating the position of the non-subject vehicle (2), having been corrected by the correction means (101).

11. An on-vehicle electronic apparatus (10) according to any one of claims 1 through 10, wherein: the position information obtaining means (101) obtains the position information indicating the position of the non-subject vehicle (2) transmitted from the non-subject vehicle (2) through a vehicle-to-vehicle communication carried out between a subject vehicle (1) and the non-subject vehicle (2).

12. An on-vehicle electronic apparatus (10) according to any one of claims 3 through 8, wherein:
the detection time information obtaining means (101) obtains the detection time information transmitted from the non-subject vehicle (2) through a vehicle-to-vehicle communication carried out between a subject vehicle (1) and the non-subject vehicle (2).

13. An on-vehicle electronic apparatus (10) according to any one of claims 4 through 8, wherein:
the speed information obtaining means (101) obtains the speed information indicating the speed of the non-subject vehicle (2) transmitted from the non-subject vehicle (2) through a vehicle-to-vehicle communication carried out between a subject vehicle (1) and the non-subject vehicle (2).

14. An on-vehicle electronic apparatus (10) according to any one of claims 1 through 13, wherein:
the estimate information obtaining means (101) obtains the estimate information transmitted from the non-subject vehicle (2) through a vehicle-to-vehicle communication carried out between a subject vehicle (1) and the non-subject vehicle (2).

15. An on-vehicle electronic apparatus (10) according to any one of claims 11 through 14, further comprising:
a position information transmission means (101) for transmitting position information indicating a position of the subject vehicle (1) to the non-subject vehicle (2) through the vehicle-to-vehicle communication.

16. An automotive communication system, comprising:
an on-vehicle electronic apparatus (10) according to any one of claims 1 through 10; and
a distribution center (3) connected with the on-vehicle electronic apparatus (10) through wireless communication,
wherein:
the position information obtaining means (101) obtains the position information indicating the position of the non-subject vehicle (2) transmitted from the distribution center (3).

17. An automotive communication system, comprising:
an on-vehicle electronic apparatus (10) according to any one of claims 3 through 8; and
a distribution center (3) connected with the on-vehicle electronic apparatus (10) through wireless communication,
wherein:
the detection time information obtaining means (101) obtains the detection time information transmitted from the distribution center (3).

18. An automotive communication system, comprising:
an on-vehicle electronic apparatus (10) according to any one of claims 4 through 8; and
a distribution center (3) connected with the on-vehicle electronic apparatus (10) through wireless communication,
wherein:
the speed information obtaining means (101) obtains the speed information indicating the speed of the non-subject vehicle (2) transmitted from the distribution center (3).

19. An automotive communication system, comprising:
an on-vehicle electronic apparatus (10) according to any one of claims 1 through 13; and
a distribution center (3) connected with the on-vehicle electronic apparatus (10) through wireless communication, wherein:
the estimate information obtaining means (101) obtains the estimate information transmitted from the distribution center (3).

20. An automotive communication system according to any one of claims 16 through 19, further comprising:
a communication control device (12) that transmits position information indicating a position of a subject vehicle (1) to the distribution center (3).

## Patentansprüche

1. Elektronisches Bordgerät (10) in einem betreffenden Fahrzeug, mit:
einer Positionsinformationsermittlungseinrichtung (101) zum Ermitteln von Positionsinformation, die eine Position eines nicht-betreffenden Fahrzeugs (2) anzeigt,
**gekennzeichnet durch**
eine Korrektureinrichtung (101) zum Korrigieren der Positionsinformation, die die Position des nicht-betreffenden Fahrzeugs (2) anzeigt, die **durch** die Positionsinformationsermittlungseinrichtung (101) ermittelt wird; und
eine Schätzinformationsermittlungseinrichtung (101) zum Ermitteln von Schätzinformation, die zur Einschätzung einer Änderung in einem Bewegungszustand des nicht-betreffenden Fahrzeugs (2) zu verwenden ist; und
eine Schätzeinrichtung (101) zum Schätzen der Änderung in dem Bewegungszustand des nicht-betreffenden Fahrzeugs (2) auf der Grundlage der Schätzinformation, die von der Schätzinformationsermittlungseinrichtung (101) ermittelt wird, wobei:
die Korrektureinrichtung (101) die Positionsinformation, die die Position des nicht-betreffenden Fahrzeugs (2) anzeigt, auf der Grundlage der Änderung in dem Bewegungszustand des nicht-betreffenden Fahrzeugs (2) korrigiert, die von der Schätzeinrichtung (101) geschätzt wird.

2. Elektronisches Bordgerät (10) nach Anspruch 1, wobei:
die Schätzinformation zumindest eines von einem Antriebsvorgangszustand in dem nicht-betreffenden Fahrzeug (2) und einem Fahrsteuerungszustand in dem nicht-betreffenden Fahrzeug (2) anzeigt; und
die Schätzeinrichtung (101) die Änderung in dem Bewegungszustand des nicht-betreffenden Fahrzeugs (2) auf der Grundlage zumindest eines von dem Antriebsvorgangszustand und dem Fahrsteuerungszustand in dem nicht-betreffenden Fahrzeug (2), der in der Schätzinformation angezeigt ist, schätzt.

3. Elektronisches Bordgerät (10) nach Anspruch 1 oder 2, weiterhin mit:
einer Erfassungszeitinformationsermittlungseinrichtung (101) zum Ermitteln von Erfassungszeitinformation, die eine Erfassungszeit anzeigt, zu der die Position des nicht-betreffenden Fahrzeugs (2) erfasst wird, wobei:
die Korrektureinrichtung (101) die Positionsinformation, die die Position des nicht-betreffenden Fahrzeugs (2) anzeigt, auf der Grundlage der Erfassungszeitinformation korrigiert, die von der Erfassungszeitinformationsermittlungseinrichtung (101) ermittelt wird.

4. Elektronisches Bordgerät (10) nach Anspruch 3, weiterhin mit:
einer Geschwindigkeitsinformationsermittlungseinrichtung (101) zum Ermitteln von Geschwindigkeitsinformation, die eine Geschwindigkeit des nicht-betreffenden Fahrzeugs (2) anzeigt, wobei: die Korrektureinrichtung (101) die Positionsinformation, die die Position des nicht-betreffenden Fahrzeugs (2) anzeigt, auf der Grundlage der Erfassungszeitinformation und der Geschwindigkeitsinformation korrigiert, die die Geschwindigkeit des nicht-betreffenden Fahrzeugs (2) anzeigt, die von der
Geschwindigkeitsinformationsermittlungseinrichtung (101) ermittelt wird.

5. Elektronisches Bordgerät (10) nach Anspruch 4, wobei:
die Korrektureinrichtung (101) eine Fahrdistanz, die das nicht-betreffende Fahrzeug (2) während eines zeitlichen Abstands zwischen der Erfassungszeit, zu der die Position des nicht-betreffenden Fahrzeugs (2) erfasst wurde, und einer aktuellen Zeit zurückgelegt hat, auf der Grundlage der Erfassungszeitinformation berechnet und die Positionsinformation, die die Position des nicht-betreffenden Fahrzeugs (2) anzeigt, auf der Grundlage der so berechneten Fahrdistanz korrigiert.

6. Elektronisches Bordgerät (10) nach Anspruch 5, wobei:
die Schätzinformation einen Bremsvorgang in dem nicht-betreffenden Fahrzeug (2) anzeigt,
die Schätzeinrichtung (101) auf der Grundlage der den Bremsvorgang anzeigenden Schätzinformation schätzt, dass sich das nicht-betreffende Fahrzeug (2) verlangsamt; und
die Korrektureinrichtung (101) die Fahrdistanz verringert, wenn die Schätzeinrichtung (101) geschätzt hat, dass sich das nicht-betreffende Fahrzeug (2) verlangsamt.

7. Elektronisches Bordgerät (10) nach Anspruch 5, wobei:
die Schätzinformation einen Beschleunigungsvorgang in dem nicht-betreffenden Fahrzeug (2) anzeigt,
die Schätzeinrichtung (101) auf der Grundlage der den Beschleunigungsvorgang anzeigenden Schätzinformation schätzt, dass das nicht-betreffende Fahrzeug (2) beschleunigt; und
die Korrektureinrichtung (101) die Fahrdistanz erhöht, wenn die Schätzeinrichtung (101) geschätzt hat, dass das nicht-betreffende Fahrzeug (2) beschleunigt.

8. Elektronisches Bordgerät (10) nach Anspruch 5, wobei:
die Schätzinformation eine Schalthebelbetätigung in dem nicht-betreffenden Fahrzeug (2) anzeigt,
die Schätzeinrichtung (101) auf der Grundlage der die Schalthebelbetätigung anzeigenden Schätzinformation schätzt, dass sich die Geschwindigkeit des nicht-betreffenden Fahrzeugs (2) ändert; und
die Korrektureinrichtung (101) die Fahrdistanz nach Maßgabe der Geschwindigkeitsänderung des nicht-betreffenden Fahrzeugs (2), die von der Schätzeinrichtung (101) geschätzt wird, berechnet.

9. Elektronisches Bordgerät (10) nach irgendeinem der Ansprüche 1 bis 8, wobei:
die Schätzinformation eine Abbiegesignalbetätigung in dem nicht-betreffenden Fahrzeug (2) anzeigt,
die Schätzeinrichtung (101) auf der Grundlage der die Abbiegesignalbetätigung anzeigenden Schätzinformation schätzt, dass sich eine Fahrtrichtung des nicht-betreffenden Fahrzeugs (2) ändert; und
die Korrektureinrichtung (101) die die Position des nicht-betreffenden Fahrzeugs (2) anzeigende Positionsinformation nach Maßgabe der von der Schätzeinrichtung (101) geschätzten Fahrtrichtung korrigiert.

10. Elektronisches Bordgerät (10) nach irgendeinem der Ansprüche 1 bis 9, weiterhin mit:
einer Darstellungssteuerungseinrichtung (101) zum Darstellen einer Karte auf einem Darstellungsbildschirm (106) und zum Anzeigen der Position des nicht-betreffenden Fahrzeugs (2) auf der Karte auf der Grundlage der Positionsinformation, die die Position des nicht-betreffenden Fahrzeugs (2) anzeigt, nachdem sie von der Korrektureinrichtung (101) korrigiert worden ist.

11. Elektronisches Bordgerät (10) nach irgendeinem der Ansprüche 1 bis 10, wobei:
die Positionsinformationsermittlungseinrichtung (101) die Positionsinformation ermittelt, die die Position des nicht-betreffenden Fahrzeugs (2) anzeigt, die von dem nicht-betreffenden Fahrzeug (2) durch eine Fahrzeug-an-Fahrzeug-Kommunikation übermittelt worden ist, die zwischen einem betreffenden Fahrzeug (1) und dem nicht-betreffenden Fahrzeug (2) ausgeführt wird.

12. Elektronisches Bordgerät (10) nach irgendeinem der Ansprüche 3 bis 8, wobei:
die Erfassungszeitinformationsermittlungseinrichtung (101) die Erfassungszeitinformation ermittelt, die von dem nicht-betreffenden Fahrzeug (2) durch eine Fahrzeug-an-Fahrzeug-Kommunikation übermittelt worden ist, die zwischen einem betreffenden Fahrzeug (1) und dem nicht-betreffenden Fahrzeug (2) ausgeführt wird.

13. Elektronisches Bordgerät (10) nach irgendeinem der Ansprüche 4 bis 8, wobei:
die Geschwindigkeitsinformationsermittlungseinrichtung (101) die Geschwindigkeitsinformation ermittelt, die die Geschwindigkeit des nicht-betreffenden Fahrzeugs (2) anzeigt, die von dem nicht-betreffenden Fahrzeug (2) durch eine Fahrzeug-an-Fahrzeug-Kommunikation übermittelt worden ist, die zwischen einem betreffenden Fahrzeug (1) und dem nicht-betreffenden Fahrzeug (2) ausgeführt wird.

14. Elektronisches Bordgerät (10) nach irgendeinem der Ansprüche 1 bis 13, wobei:
die Schätzinformationsermittlungseinrichtung (101) die Schätzinformation ermittelt, die von dem nicht-betreffenden Fahrzeug (2) durch eine Fahrzeug-an-Fahrzeug-Kommunikation übermittelt worden ist, die zwischen einem betreffenden Fahrzeug (1) und dem nicht-betreffenden Fahrzeug (2) ausgeführt wird.

15. Elektronisches Bordgerät (10) nach irgendeinem der Ansprüche 11 bis 14, weiterhin mit:
einer Positionsinformationsübermittlungseinrichtung (101) zum Übermittelt von Positionsinformation, die eine Position des betreffenden Fahrzeugs (1) an das nicht-betreffende Fahrzeug (2) durch die Fahrzeug-an-Fahrzeug-Kommunikation übermittelt.

16. Fahrzeug-Kommunikationssystem mit:
einem elektronischen Bordgerät (10) nach irgendeinem der Ansprüche 1 bis 10; und
einer Verteilungszentrale (3), die mit dem elektronischen Bordgerät (10) durch Drahtloskommunikation verbunden ist, wobei:
die Positionsinformationsermittlungseinrichtung (101) die Positionsinformation ermittelt, die die von der Verteilungszentrale (3) übertragene Position des nicht-betreffenden Fahrzeugs (2) anzeigt.

17. Fahrzeug-Kommunikationssystem mit:
einem elektronischen Bordgerät (10) nach irgendeinem der Ansprüche 3 bis 8; und
einer Verteilungszentrale (3), die mit dem elektronischen Bordgerät (10) durch Drahtloskommunikation verbunden ist, wobei:
die Erfassungszeitinformationsermittlungseinrichtung (101) die von der Verteilungszentrale (3) übertragene Erfassungszeitinformation ermittelt.

18. Fahrzeug-Kommunikationssystem mit:
einem elektronischen Bordgerät (10) nach irgendeinem der Ansprüche 4 bis 8; und
einer Verteilungszentrale (3), die mit dem elektronischen Bordgerät (10) durch Drahtloskommunikation verbunden ist, wobei:
die Geschwindigkeitsinformationsermittlungseinrichtung (101) die Geschwindigkeitsinformation ermittelt, die die von der Verteilungszentrale (3) übermittelte Geschwindigkeit des nicht-betreffenden Fahrzeugs (2) anzeigt.

19. Fahrzeug-Kommunikationssystem mit:
einem elektronischen Bordgerät (10) nach irgendeinem der Ansprüche 1 bis 13; und
einer Verteilungszentrale (3), die mit dem elektronischen Bordgerät (10) durch Drahtloskommunikation verbunden ist, wobei:
die Schätzinformationsermittlungseinrichtung (101) die von der Verteilungszentrale (3) übermittelte Schätzinformation ermittelt.

20. Fahrzeug-Kommunikationssystem nach irgendeinem der Ansprüche 16 bis 19, weiterhin mit:
einer Kommunikationssteuerungsvorrichtung (12), die Positionsinformation, welche eine Position eines betreffenden Fahrzeugs (1) anzeigt, an die Verteilungszentrale (3) übermittelt.

## Revendications

1. Dispositif électronique embarqué (10) à bord d'un véhicule sujet, comprenant : un moyen d'obtention (101) d'informations de position servant à obtenir des informations de position indiquant une position d'un véhicule non sujet (2),
**caractérisé par**
un moyen de correction (101) servant à corriger les informations de position indiquant la position du véhicule non sujet (2) obtenues par le moyen d'obtention (101) d'informations de position ; et
un moyen d'obtention (101) d'informations d'estimation destiné à servir à estimer un changement survenant dans un état de déplacement du véhicule non sujet (2) ; et
un moyen d'estimation (101) servant à estimer le changement dans l'état de déplacement du véhicule non sujet (2) d'après les informations d'estimation obtenues par le moyen d'obtention (101) d'informations d'estimation,
le moyen de correction (101) corrigeant les informations de position indiquant la position du véhicule non sujet (2) d'après le changement dans l'état de déplacement du véhicule non sujet (2) estimé par le moyen d'estimation (101).

2. Dispositif électronique embarqué (10) selon la revendication 1, dans lequel :
les informations d'estimation indiquent un état d'action de conduite dans le véhicule non sujet (2) et/ou un état de commande de circulation dans le véhicule non sujet (2) et un état de commande de circulation dans le véhicule non sujet (2) ; et
le moyen d'estimation (101) estime le changement dans l'état de déplacement du véhicule non sujet (2) d'après un état d'action de conduite et/ou l'état de commande de circulation dans le véhicule non sujet (2) indiqué(s) dans les informations d'estimation.

3. Dispositif électronique embarqué (10) selon la revendication 1 ou 2, comprenant en outré :
un moyen d'obtention (101) d'informations d'instant de détection servant à obtenir des informations d'instant de détection indiquant un instant de détection auquel est détectée la position du véhicule non sujet (2), dans lequel :
le moyen de correction (101) corrige les informations de position indiquant la position du véhicule non sujet (2) d'après les informations d'instant de détection obtenues par le moyen d'obtention (101) d'informations d'instant de détection.

4. Dispositif électronique embarqué (10) selon la revendication 3, comprenant en outré :
un moyen d'obtention (101) d'informations de vitesse servant à obtenir des informations de vitesse indiquant une vitesse du véhicule non sujet (2), dans lequel : le moyen de correction (101) corrige des informations de position indiquant la position du véhicule non sujet (2) d'après les informations d'instant de détection et les informations de vitesse indiquant la vitesse du véhicule non sujet (2) obtenues par le moyen d'obtention (101) d'informations de vitesse.

5. Dispositif électronique embarqué (10) selon la revendication 4, dans lequel :
le moyen de correction (101) calcule, d'après les informations d'instant de détection, une distance parcourue que le véhicule non sujet (2) a parcourue pendant un laps de temps entre l'instant de détection auquel a été détectée la position du véhicule non sujet (2) et un instant immédiat, et corrige, d'après la distance parcourue ainsi calculée, les informations de position indiquant la position du véhicule non sujet (2).

6. Dispositif électronique embarqué (10) selon la revendication 5, dans lequel :
les informations d'estimation indiquent une action de freinage dans le véhicule non sujet (2),
le moyen d'estimation (101) estime, d'après les informations d'estimations indiquant l'action de freinage, que le véhicule non sujet (2) est en train de ralentir ; et
le moyen de correction (101) réduit la distance parcourue si le moyen d'estimation (101) a estimé que le véhicule non sujet (2) est en train de ralentir.

7. Dispositif électronique embarqué (10) selon la revendication 5, dans lequel :
les informations d'estimation indiquent une action d'accélération dans le véhicule non sujet (2),
le moyen d'estimation (101) estime, d'après les informations d'estimation indiquant l'action d'accélération, que le véhicule non sujet (2) est en train d'accélérer ; et
le moyen de correction (101) accroît la distance parcourue si le moyen d'estimation (101) a estimé que le véhicule non sujet (2) est en train d'accélérer.

8. Dispositif électronique embarqué (10) selon la revendication 5, dans lequel :
les informations d'estimation indiquent un actionnement de levier de changement de vitesse dans le véhicule non sujet (2),
le moyen d'estimation (101) estime, d'après les informations d'estimation indiquant l'actionnement de levier de changement de vitesse, que la vitesse du véhicule non sujet (2) est en train de changer ; et
le moyen de correction (101) calcule la distance parcourue en fonction du changement de vitesse du véhicule non sujet (2) estimé par le moyen d'estimation (101).

9. Dispositif électronique embarqué (10) selon l'une quelconque des revendications 1 à 8, dans lequel :
les informations d'estimation indiquent une activation de signal de changement de direction dans le véhicule non sujet (2),
le moyen d'estimation (101) estime, d'après les informations d'estimation indiquant l'activation de signal de changement de direction, qu'une direction de circulation du véhicule non sujet (2) est en train de changer ; et
le moyen de correction (101) corrige les informations de position indiquant la position du véhicule non sujet (2) en fonction de la direction de circulation estimée par le moyen d'estimation (101).

10. Dispositif électronique embarqué (10) selon l'une quelconque des revendications 1 à 9, comprenant en outré :
un moyen de commande d'affichage (101) servant à afficher une carte sur un écran d'affichage (106) et à indiquer la position du véhicule non sujet (2) sur la carte d'après les informations de position indiquant la position du véhicule non sujet (2), lesquelles ont été corrigées par le moyen de correction (101).

11. Dispositif électronique embarqué (10) selon l'une quelconque des revendications 1 à 10, dans lequel :
le moyen d'obtention (101) d'informations de position obtient les informations de position indiquant la position du véhicule non sujet (2), émises depuis le véhicule non sujet (2) par l'intermédiaire d'une communication de véhicule à véhicule réalisée entre un véhicule sujet (1) et le véhicule non sujet (2).

12. Dispositif électronique embarqué (10) selon l'une quelconque des revendications 3 à 8, dans lequel :
le moyen d'obtention (101) d'informations d'instant de détection obtient les informations d'instant de détection émises depuis le véhicule non sujet (2) par l'intermédiaire d'une communication de véhicule à véhicule réalisée entre un véhicule sujet (1) et le véhicule non sujet (2).

13. Dispositif électronique embarqué (10) selon l'une quelconque des revendications 4 à 8, dans lequel :
le moyen d'obtention (101) d'informations de vitesse obtient les informations de vitesse indiquant la vitesse du véhicule non sujet (2), émises depuis le véhicule non sujet (2) par l'intermédiaire d'une communication de véhicule à véhicule réalisée entre un véhicule sujet (1) et le véhicule non sujet (2).

14. Dispositif électronique embarqué (10) selon l'une quelconque des revendications 1 à 13, dans lequel :
le moyen d'obtention (101) d'informations d'estimation obtient les informations d'estimation émises depuis le véhicule non sujet (2) par l'intermédiaire d'une communication de véhicule à véhicule réalisée entre un véhicule sujet (1) et le véhicule non sujet (2).

15. Dispositif électronique embarqué (10) selon l'une quelconque des revendications 11 à 14, comprenant en outre :
un moyen d'émission (101) d'informations de position pour émettre vers le véhicule non sujet (2), par l'intermédiaire de la communication de véhicule à véhicule, des informations de position indiquant une position du véhicule sujet (1).

16. Système de communication entre automobiles, comprenant :
un dispositif électronique embarqué (10) selon l'une quelconque des revendications 1 à 10 ; et
un centre de distribution (3) connecté au dispositif électronique embarqué (10) par l'intermédiaire d'une communication radioélectrique, dans lequel :
le moyen d'obtention (101) d'informations de position obtient les informations de position indiquant la position du véhicule non sujet (2), émises depuis le centre de distribution (3).

17. Système de communication entre automobiles, comprenant :
un dispositif électronique embarqué (10) selon l'une quelconque des revendications 3 à 8 ; et
un centre de distribution (3) connecté au dispositif électronique embarqué (10) par l'intermédiaire d'une communication radioélectrique, dans lequel :
le moyen d'obtention (101) d'informations d'instant de détection obtient les informations d'instant de détection émises depuis le centre de distribution (3).

18. Système de communication entre automobiles, comprenant :
un dispositif électronique embarqué (10) selon l'une quelconque des revendications 4 à 8 ; et
un centre de distribution (3) connecté au dispositif électronique embarqué (10) par l'intermédiaire d'une communication radioélectrique, dans lequel :
le moyen d'obtention (101) d'informations de vitesse obtient les informations indiquant la vitesse du véhicule non sujet (2), émises depuis le centre de distribution (3).

19. Système de communication entre automobiles, comprenant :
un dispositif électronique embarqué (10) selon l'une quelconque des revendications 1 à 13 ; et
un centre de distribution (3) connecté au dispositif électronique embarqué (10) par l'intermédiaire d'une communication radioélectrique, dans lequel :
le moyen d'obtention (101) d'informations d'estimation obtient les informations d'estimation émises depuis le centre de distribution (3).

20. Système de communication entre automobiles selon l'une quelconque des revendications 16 à 19, comprenant en outre :
un dispositif de commande de communication (12) qui transmet au centre de distribution (3) des informations de position indiquant une position d'un véhicule sujet (1).
